# EUROPEAN PATENT APPLICATION

(11) **EP 3 103 915 A1**
(43) Date of publication of application: **14.12.2016**
(21) Application number: 15743190.9
(22) Date of filing: 03.02.2015
(51) Int. Cl.: D06M 15/55, D06M 13/184, D06M 13/352, D06M 15/41, D06M 15/693, D06M 101/32, D06M 101/36

(54) **ADHESIVE COMPOSITION FOR ORGANIC FIBERS, AND METHOD FOR TREATING ORGANIC FIBERS**

(30) Priority: 03.02.2014 JP 2014018733
(71) Applicant: NAGASE CHEMTEX CORPORATION, Osaka 550-8668 (JP)
(72) Inventor: FUJII, Satoru, Tatsuno-shi Hyogo 679-4124 (JP); HOSOMI, Tetsuya, Tatsuno-shi Hyogo 679-4124 (JP); FUSHIKI, Masato, Tatsuno-shi Hyogo 679-4124 (JP)
(74) Representative: Hoffmann Eitle
(86) International application number: PCT/JP2015/000468
(87) International publication number: WO 2015/115118

(57) **Abstract**

An object of the present invention is to provide an adhesive agent composition for an organic fiber, the adhesive agent composition hardly causing precipitation or cohesion and having stable adhesive force.

The present invention provides an adhesive agent composition for an organic fiber, the adhesive agent composition including epoxy resin and a water soluble curing agent, and also provides to a method of treating an organic fiber, the method including the steps of: (i) treating the organic fiber with the adhesive agent composition as a first treating agent; and (ii) treating the organic fiber, having been treated with the first treating agent, with a second treating agent containing a resorcin-formalin-rubber latex (RFL).

## Description

### Technical Field

The present invention relates to an adhesive agent composition for an organic fiber, the adhesive agent composition bonding rubber and the organic fiber and being used to produce the organic fiber used to reinforce rubber products, such as tires, various hoses, and belts (timing belts, conveyor belts, V belts, and the like) and also relates to a method of treating the organic fiber.

### Background Art

In rubber used for tires, various hoses, belts (timing belts, conveyor belts, V belts, and the like), and the like, an organic fiber such as a polyester fiber is used as a reinforcing material. For example, as a conventional treatment of sticking a water-based treating agent basically containing epoxy resin and blocked isocyanate onto a polyester fiber for the purpose of bonding the rubber and the polyester fiber, dip in the water-based treating agent has been performed (PTL 1).

### Citation List

### Patent Literature

PTL 1: Japanese Laid-Open Patent Application Publication No. 08-035179

### Summary of Invention

### Technical Problem

To use the blocked isocyanate in the water-based treating agent, the blocked isocyanate needs to be a water dispersion. However, the dispersion tends to cause precipitation or cohesion. Each time sticking and solidification (so-called gum-up) of the blocked isocyanate occur at a treatment device (especially a squeezing roll) in addition to the precipitation and cohesion in a treatment bath, a manufacturing line needs to be stopped, and stuck and solidified matters need to be removed. This has been a cause of deterioration of treatment efficiency.

Since the blocked isocyanate exists in the water-based treating agent as the dispersion, it is difficult to apply the blocked isocyanate uniformly to the organic fiber. To obtain stable adhesive force, an excess amount of treating agent needs to be used. This has been a cause of a cost increase.

The present invention was made under these circumstances, and an object of the present invention is to provide an adhesive agent composition for an organic fiber, the adhesive agent composition hardly causing precipitation or cohesion, facilitating chemical liquid management, and having stable and high adhesive force.

### Solution to Problem

A first aspect of the present invention relates to an adhesive agent composition for an organic fiber, the adhesive agent composition including epoxy resin and a water soluble curing agent.

It is preferable that the water soluble curing agent be an imidazole compound or a carboxylate compound.

It is preferable that the organic fiber be a polyester fiber or an aramid fiber.

A second aspect of the present invention relates to a method of treating an organic fiber, the method including the steps of:
(i) treating the organic fiber with the above adhesive agent composition as a first treating agent; and
(ii) treating the organic fiber, having been treated with the first treating agent, with a second treating agent containing a resorcin-formalin-rubber latex (RFL).

It is preferable that the organic fiber be a polyester fiber or an aramid fiber.

A third aspect of the present invention relates to an organic fiber treated by the above method.

A fourth aspect of the present invention relates to a tire, hose, or belt using the organic fiber treated by the above treating method.

### Advantageous Effects of Invention

The present invention provides an adhesive agent composition for an organic fiber, the adhesive agent composition hardly causing precipitation or cohesion, facilitating chemical liquid management, and having stable and high adhesive force, and also provides a method of treating an organic fiber using the adhesive agent composition for the organic fiber. The present invention further provides an organic fiber that can be used as a reinforcing material for a rubber article since the organic fiber has high adhesive force with respect to the rubber article.

### Description of Embodiments

Hereinafter, one example of a preferred embodiment of the present invention will be specifically explained.

An adhesive agent composition for an organic fiber according to the present invention contains epoxy resin and a water soluble curing agent.

### Epoxy resin

The epoxy resin used in the present invention is an epoxy compound having two or more epoxy groups as functional groups in its molecule.

Examples of the epoxy resin include: glycidyl ether, such as ethylene glycol glycidyl ether, glycerol polyglycidyl ether, diglycerol polyglycidyl ether, sorbitol polyglycidyl ether, polyglycerol polyglycidyl ether, bisphenol-A diglycidyl ether, bisphenol-S diglycidyl ether, novolak glycidyl ether, and brominated bisphenol-A diglycidyl ether; glycidyl ester, such as hexahydrophthalic glycidyl ester and dimer acid glycidyl ester; glycidyl amine, such as triglycidyl isocyanurate, glycidyl hydantoin, tetraglycidyl diaminodiphenyl methane, triglycidyl p-aminophenol, triglycidyl m-aminophenol, diglycidyl aniline, diglycidyl toluidine, tetraglycidyl m-xylylenediamine, diglycidyl tribromo aniline, and tetraglycidyl bisamino methyl cyclohexane; and alicyclic or aliphatic epoxide, such as 3,4-epoxy cyclohexyl methyl carboxylate, epoxidized polybutadiene, and epoxidized soybean oil. Each of these examples may be used alone, or two or more of these examples may be used in combination.

Among these examples, ethylene glycol glycidyl ether, glycerol polyglycidyl ether, diglycerol polyglycidyl ether, sorbitol polyglycidyl ether, and polyglycerol polyglycidyl ether are especially preferable since these are high in water solubility.

The concentration of the epoxy resin in the present invention is preferably 0.5 to 10 wt.% in a solution or dispersion, more preferably 0.7 to 5 wt.%. This is because: if the concentration is less than 0.5 wt.%, adhesive force decreases; and if the concentration exceeds 10 wt.%, the epoxy resin is gelatinized, and this becomes a cause of, for example, the gum-up.

### Water soluble curing agent

The water soluble curing agent used in the present invention is not especially limited as long as it has water solubility and can promote a curing reaction of the epoxy resin. In the present invention, the water solubility means that an agent dissolves in water by 1 mass % or more under ordinary temperature and normal pressure.

The content of the water soluble curing agent used in the present invention is preferably 1 to 300 parts by weight per 100 parts by weight of the epoxy resin, more preferably 5 to 100 parts by weight. This is because: if the content is less than 1 part by weight, the reaction is inadequate, and the adhesive force decreases; and if the content exceeds 300 parts by weight, the curing agent is excessive, and a crosslink density decreases.

Examples of the water soluble curing agent used in the present invention include: water soluble imidazole compounds, such as 2-methyl imidazole, 1,2-dimethyl imidazole, 2-ethyl-4-methyl imidazole, 1-cyanoethyl-2-methyl imidazole, 1-cyanoethyl-2-undecyl imidazole, 1-cyanoethyl-2-ethyl-4-methyl imidazole, 1-cyanoethyl-2-phenyl imidazole, 1-cyanoethyl-2-phenyl imidazolium trimellitate, 2,4-diamino-6-[2'-methylimidazolyl-(1')]-ethyl-s-triazine, and 2,4-diamino-6-[2'-ethyl-4'-methylimidazolyl-(1')]-ethyl-s-triazine; imidazolines, such as 2-phenyl imidazoline; and salt compounds (carboxylate compounds) of carboxylic acids, such as aromatic carboxylic acids, unsaturated carboxylic acids, and saturated carboxylic acids. Examples of the aromatic carboxylic acids include phthalic acid, isophthalic acid, terephthalic acid, trimellitic acid, pyromellitic acid, naphthalene dicarboxylic acid, p-oxybenzoic acid, dioxybenzoic acid, trioxybenzoic acid, benzoic acid, methylsalicylic acid, oxyphthalic acid, dioxyphthalic acid, and oxyterephthalic acid. Examples of the unsaturated carboxylic acids include maleic acid, fumaric acid, itaconic acid, citraconic acid, mesaconic acid, dodecenyl succinic acid, pentadecenyl succinic acid, and octadecenyl succinic acid. Examples of the saturated carboxylic acids include succinic acid, adipic acid, sebacic acid, azelaic acid, 1,2,3,4-butanetetracarboxylic acid, cyclobutane dicarboxylic acid, cyclohexane dicarboxylic acid, adamantine dicarboxylic acid, and dimethylol butanoic acid.

Among these examples, 2-methyl imidazole, 2-ethyl imidazole, 2-ethyl-4-methyl imidazole, 1-cyanoethyl-2-methyl-imidazole, and 1-cyanoethyl-2-ethyl-4-methyl-imidazole are preferable as the water soluble imidazole compound since these are high in water solubility. Each of these examples may be used alone, or a mixture of two or more of these examples may be used.

When the water soluble curing agent used in the present invention is the water soluble imidazole compound, the content thereof is preferably 1 to 50 parts by weight per 100 parts by weight of the epoxy resin, more preferably 3 to 20 parts by weight. This is because: of the content is less than 1 part by weight, the curing may become inadequate; and if the content exceeds 50 parts by weight, the imidazole compound may remain, and the adhesive force may decrease.

In the present invention, the carboxylate compound is a salt compound constituted by carboxylic acid and metal.

In the case of using the carboxylate compound, it may be a partial salt, a perfect salt, or a carboxylate compound obtained by hydrolysis of acid anhydride in a treatment bath. It should be noted that the partial salt of the carboxylate compound is a salt in which a part of carboxylic acid groups of a carboxylic acid compound are neutralized, and the perfect salt of the carboxylate compound is a salt in which all the carboxylic acid groups of the carboxylic acid compound are neutralized.

As the carboxylate compound, isophthalic acid salt compound, terephthalic acid salt compound, trimellitic acid salt compound, pyromellitic acid salt compound, p-oxybenzoic acid salt compound, dioxybenzoic acid salt compound, trioxybenzoic acid salt compound, benzoic acid salt compound, methylsalicylic acid salt compound, oxyphthalic acid salt compound, dioxyphthalic acid salt compound, and oxyterephthalic acid salt compound are preferable since excellent heat resistance can be obtained. Further, to increase the water solubility, sodium salt and potassium salt are preferable. Each of these examples may be used alone, or a mixture of two or more of these examples may be used.

When the water soluble curing agent used in the present invention is the carboxylate compound, the content thereof is preferably 1 to 300 parts by weight per 100 parts by weight of the epoxy resin, more preferably 10 to 150 parts by weight. This is because: if the content is less than 1 part by weight, a crosslinked structure may become inadequate; and if the content exceeds 300 parts by weight, the carboxylic acid compound may remain, and the adhesive force may decrease.

### Components other than epoxy resin and water soluble curing agent

It is preferable that the adhesive agent composition for the organic fiber according to the present invention be a water-based composition, that is, contain water or a solvent containing water as a major component. The water or the solvent containing the water serves as a solvent that allows dissolution of the water soluble curing agent and is used in a reaction system of the epoxy resin and the water soluble curing agent.

The adhesive agent composition for the organic fiber according to the present invention may contain the following optional component(s) according to need as long as the object and effects of the present invention are not inhibited. Examples of the optional component include resin copolymerizable with the epoxy resin, a curing agent other than the water soluble curing agent, an organic thickener, an antioxidant, a light stabilizer, an adhesive property improver, a reinforcing agent, a softening agent, a coloring agent, a leveling agent, a flame retardant, an antistatic agent, an antifoaming agent, and a rubber latex.

Examples of the resin copolymerizable with the epoxy resin include polyvinyl alcohol (PVA), aqueous acrylic resin, and aqueous polyurethane resin. To increase adhesive force and cohesive force of an adhesive layer, polyvinyl alcohol is preferable.

The curing agent other than the water soluble curing agent is an agent generally used as the curing agent for the epoxy resin, and examples thereof include modified polyamine, polyamide resin, polymercaptan resin, and polysulfide resin.

### Treating method

A method of treating an organic fiber according to the present invention includes the steps of: treating an organic fiber with the adhesive agent composition for the organic fiber according to the present invention as a first treating agent; and treating the organic fiber, having been treated with the first treating agent, with a second treating agent containing a resorcin-formalin-rubber latex (RFL).

When using the adhesive agent composition for the organic fiber according to the present invention as the first treating agent, it is preferable to prepare the adhesive agent composition by dissolving the epoxy resin and the water soluble curing agent in water.

The total solid content of the first treating agent is preferably 1 to 20 wt.%, more preferably 2 to 10 wt.%. This is because: if the total solid content is less than 1 wt.%, the amount of components of the first treating agent sticking to the organic fiber may become inadequate, and adequate adhesive force may not be obtained; and if the total solid content exceeds 30 wt.%, the amount of components of the first treating agent sticking to the organic fiber may become too large, and as a result, the obtained fiber may become too hard, or a gelled matter may be formed at the fiber or the treatment device.

Next, the second treating agent is a composition containing the resorcin-formalin-rubber latex (RFL).

The resorcin-formalin-rubber latex (RFL) can be prepared by mixing and aging of: an initial condensate of resorcin and formalin; and rubber latex.

The initial condensate of resorcin and formalin is obtained by a condensation reaction between a resorcin monomer and a formaldehyde monomer in water in the presence of: acid catalyst, such as hydrochloric acid or sulfuric acid; alkali metal hydroxide, such as sodium hydroxide; or ammonia.

In the initial condensate, the mole ratio of the resorcin monomer to the formaldehyde monomer is preferably 1 : 0.1 to 1 : 8, more preferably 1 : 0.5 to 1 : 5, and further preferably 1 : 1 to 1 : 4.

Examples of the rubber latex include natural rubber latex, styrene-butadiene copolymer latex, and styrene-butadiene-vinylpyridine copolymer latex. In the resorcin-formalin-rubber latex (RFL), a solid content ratio of the initial condensate of resorcin and formalin to the rubber latex is preferably 1 : 1 to 1 : 15, more preferably 1 : 3 to 1 : 12.

Each of these examples may be used alone, or a mixture of two or more of these examples may be used. Especially, styrene-butadiene-vinylpyridine copolymer latex is preferable since high adhesive force with respect to natural rubber and SBR (styrene butadiene rubber) can be obtained.

The initial condensate of resorcin and formalin may contain the resorcin monomer, the formaldehyde monomer, a minute amount of molecular weight regulator (calcium chloride, for example), a solvent (methyl ethyl ketone (MEK), for example), and the like.

The total solid content of the second treating agent is preferably 5 to 50 wt.%, more preferably 10 to 35 wt.%. This is because: if the total solid content is less than 5 wt.%, the amount of components of the second treating agent sticking to the organic fiber may become small, and adequate adhesive force may not be obtained; and if the total solid content exceeds 50 wt.%, the obtained fiber may become hard, and bending fatigue strength and the like may become low.

In addition to the initial condensate of resorcin and formalin and the rubber latex, vulcanization regulator, zinc oxide, antioxidant, and the like may be added to the second treating agent.

In the present invention, treating the organic fiber with the first treating agent denotes a treatment of sticking the first treating agent to the organic fiber, and this can be performed by using an arbitrary method, such as an application using a roller, spraying from a nozzle, or dip in a solution (first treating agent). After the treatment using the first treating agent, the organic fiber to which the first treating agent has stuck may be subjected to a drying treatment at 100 to 250°C for one to five minutes, and then, may be subjected to a heat treatment at 150 to 250°C for one to five minutes. The heat treatment is performed preferably at 180 to 240°C for one minute. If the temperature of the heat treatment is too low, the adhesive force may become inadequate. If the temperature of the heat treatment is too high, the organic fiber may deteriorate, and this may become a cause of strength degradation.

To prevent the obtained fiber from becoming too hard while obtaining adequate adhesive force, the amount of first treating agent sticking to the organic fiber is preferably 0.1 to 10 wt.%, more preferably 1 to 7 wt.% on the solid content basis.

In the present invention, treating the organic fiber with the second treating agent denotes a treatment of sticking the second treating agent to the organic fiber which has been treated with the first treating agent, and this treatment may be performed using the same means and conditions as the process of treating the organic fiber with the first treating agent.

To prevent the obtained fiber form becoming too hard while obtaining adequate adhesive force, the amount of second treating agent sticking to the organic fiber is preferably 0.1 to 10 wt.%, more preferably 0.5 to 5 wt.% on the solid content basis.

To adjust the amount of agent sticking to the organic fiber, each of the step of treating the organic fiber with the first treating agent and the step of treating the organic fiber with the second treating agent may further adopt a means, such as pressing by a press-contact roller, scraping by a scraper, blow-off by air blowing, suction, or beating by a beater.

### Organic fiber

The adhesive agent composition for the organic fiber according to the present invention can be used for organic fibers normally used as reinforcing cords of tires, hoses, belts, and the like. Examples of such organic fibers include nylon fiber, rayon fiber, vinylon fiber, polyester fiber (such as polyethylene terephthalate (PET) and polyethylene naphthalate (PEN)), aramid fiber, and polyurethane fiber.

The organic fiber treated by the method of treating the organic fiber according to the present invention has an excellent adhesive property regarding adhesion between the rubber and the organic fiber. Thus, the adhesive agent component is preferably used for polyester fiber and aramid fiber among the above organic fibers especially since: the adhesion between the rubber and each of polyester fiber and aramid fiber by a conventional method is relatively difficult; and the mechanical strength of the obtained fiber becomes excellent.

The organic fiber according to the present invention may have any form, such as filament yarn, cord, woven stuff, or woven fabric.

For example, used as the polyester fiber is fiber prepared in such a manner that: polyethylene terephthalate having yarn viscosity of 0.95 is subjected to melt spinning and stretching to become multifilaments having 1,500 denier; the multifilaments are firstly twisted 40 times per 10 cm to become a primary twisted cord; two primary twisted cords are finally twisted 40 times per 10 cm in an opposite direction to the primary twisted cord.

Further, for example, used as the aramid fiber is fiber prepared in such a manner that: 1,000 aromatic polyamide multifilaments (Kevlar produced by Du Pont Kabushiki Kaisha) having nominal fineness of 1,500 denier are firstly twisted 35 times per 10 cm to become a primary twisted cord; and two primary twisted cords are finally twisted 35 times per 10 cm in an opposite direction to the primary twisted cord.

### Use

By using the organic fiber treated with the adhesive agent composition for the organic fiber according to the present invention in tires, hoses, and belts, fracture resistance, fatigue resistance, and durability can be improved.

### EXAMPLES

The present invention will be explained in more detail using Examples below. However, the present invention is not limited to these Examples. In the following explanation, "part(s)" and "%" denote "part(s) by weight" and "wt.%", respectively unless otherwise specified.

### Example 1

45 g of EX-614B (sorbitol polyglycidyl ether produced by Nagase ChemteX Corporation) was added as the epoxy resin to 950 g of water while stirring the water. Then, 5 g of 2-ethyl-4-methyl imidazole was added thereto as the water soluble curing agent. Thus, the adhesive agent composition for the organic fiber was prepared as the first treating agent.

### Evaluation of stability

The adhesive agent composition prepared as the first treating agent was put into a glass tube, and the time-lapse change of the appearance of the treating agent was visually confirmed (immediately after the preparation, an hour after the preparation, and hourly until five hours after the preparation). Thus, the stability was evaluated based on the degree of precipitation.

The evaluations are made as below, and results are shown in Table 1.
Good: Precipitation was not observed.
Not so good: Precipitation was slightly observed.
Poor: A large amount of precipitated matters were observed.

### Evaluation of adhesive property

172 g of Nipol 2518FS (vinylpyridine-styrene-butadiene terpolymer water emulsion liquid produced by Zeon Corporation, total solid content of 40.5%) and 73 g of Nipol LX-112 (styrene-butadiene copolymer 41% water emulsion liquid produced by Zeon Corporation, total solid content of 40.5%) were diluted as the rubber latex in 76 g of water. 270 g of a resorcin-formalin initial condensate dispersing liquid (mole ratio of resorcin to formaldehyde of 1 : 1.5, total solid content of 6.5%) was added as resorcin-formalin to this diluent while slowly stirring the diluent. Thus, a RFL liquid was prepared. The obtained RFL liquid was diluted in 591 g of water. Thus, the second treating agent (total solid content of 10%) was prepared.

As the polyester fiber, a polyester cord (1,500 denier, two twisted cords, primary twisting of 40 times per 10 cm, final twisting of 40 times per 10 cm) was dipped in the first treating agent. The polyester cord was then dried at 150°C for 130 seconds and was further subjected to a heat treatment at 240°C for 130 seconds. Next, the polyester cord was dipped in the second treating agent. The polyester cord was then dried at 150°C for 130 seconds and was further subjected to the heat treatment at 240°C for 70 seconds.

Based on "Test methods for chemical fiber tire cords" of JIS L 1017, the treated polyester cord was embedded in unvulcanized rubber containing natural rubber as a major component and was subjected to press vulcanization at 150°C for 30 minutes. Next, the polyester cord was pulled out from a rubber block at a speed of 350 mm/minute. Force required for the pulling-out was shown by N/cm. Thus, the adhesive property was evaluated. Results are shown in Table 2.

### Example 2

29 g of EX-313 (glycerol polyglycidyl ether produced by Nagase ChemteX Corporation) was added as the epoxy resin to 950 g of water while stirring the water. Then, 21 g of sodium terephthalate was added thereto as the water soluble curing agent. Thus, the adhesive agent composition for the organic fiber was prepared as the first treating agent.

The stability and the adhesive property were evaluated in the same manner as in Example 1. Results are shown in Tables 1 and 2.

### Example 3

29 g of EX-313 (glycerol polyglycidyl ether produced by Nagase ChemteX Corporation) was added as the epoxy resin to 950 g of water while stirring the water. Then, 21 g of sodium phthalate was added thereto as the water soluble curing agent. Thus, the adhesive agent composition for the organic fiber was prepared as the first treating agent.

The stability and the adhesive property were evaluated in the same manner as in Example 1. Results are shown in Tables 1 and 2.

### Example 4

29 g of EX-512 (polyglycerol polyglycidyl ether produced by Nagase ChemteX Corporation) was added as the epoxy resin to 950 g of water while stirring the water. Then, 21 g of sodium trimellitate was added thereto as the water soluble curing agent. Thus, the adhesive agent composition for the organic fiber was prepared as the first treating agent.

The stability and the adhesive property were evaluated in the same manner as in Example 1. Results are shown in Tables 1 and 2.

### Comparative Example 1

13 g of EX-313 (glycerol polyglycidyl ether produced by Nagase ChemteX Corporation) was added as the epoxy resin to 950 g of water while stirring the water. Then, 37 g of ε-caprolactam block diphenyl methane diisocyanate water dispersion (total solid content of 50.5%) was added thereto as the blocked isocyanate. Thus, the adhesive agent composition for the organic fiber was prepared as the first treating agent.

The stability and the adhesive property were evaluated in the same manner as in Example 1. Results are shown in Tables 1 and 2.

**Table 1**

| | | Example 1 | Example 2 | Example 3 | Example 4 | Comparative Example 1 |
|---|---|---|---|---|---|---|
| | sorbitol polyglycidyl ether | 45 | 0 | 0 | 0 | 0 |
| First treating agent | glycerol polyglycidyl ether | 0 | 29 | 29 | 0 | 13 |
| | polyglycerol polyglycidyl ether | 0 | 0 | 0 | 29 | 0 |
| | 2-ethyl-4-methyl imidazole | 5 | 0 | 0 | 0 | 0 |
| | sodium terephthalate | 0 | 21 | 0 | 0 | 0 |
| | sodium phthalate | 0 | 0 | 21 | 0 | 0 |
| | sodium trimellitate | 0 | 0 | 0 | 21 | 0 |
| | ε-caprolactam block diphenyl methane diisocyanate water dispersion (blocked isocyanate) | 0 | 0 | 0 | 0 | 37 |
| | Immediately after preparation | Good | Good | Good | Good | Good |
| | 1 hour after preparation | Good | Good | Good | Good | Not so good |
| Stability | 2 hours after preparation | Good | Good | Good | Good | Not so good |
| | 3 hours after preparation | Good | Good | Good | Good | Not so good |
| | 4 hours after preparation | Good | Good | Good | Good | Not so good |
| | 5 hours after preparation | Good | Good | Good | Good | Poor |

**Table 2**

| | | Example 1 | Example 2 | Example 3 | Example 4 | Comparative Example 1 |
|---|---|---|---|---|---|---|
| | sorbitol polyglycidyl ether | 45 | 0 | 0 | 0 | 0 |
| | glycerol polyglycidyl ether | 0 | 29 | 29 | 0 | 13 |
| | polyglycerol polyglycidyl ether | 0 | 0 | 0 | 29 | 0 |
| First treating agent | 2-ethyl-4-methyl imidazole | 5 | 0 | 0 | 0 | 0 |
| | sodium terephthalate | 0 | 21 | 0 | 0 | 0 |
| | sodium phthalate | 0 | 0 | 21 | 0 | 0 |
| | sodium trimellitate | 0 | 0 | 0 | 21 | 0 |
| | ε-caprolactam block diphenyl methane diisocyanate water dispersion (blocked isocyanate) | 0 | 0 | 0 | 0 | 37 |
| Total solid content of second treating agent (wt.%) | resorcin-formalin-rubber latex | 10 | 10 | 10 | 10 | 10 |
| Adhesive property | Adhesive force (N/cm) | 150 | 145 | 155 | 170 | 140 |

As is clear from Table 1, as compared to a case (Comparative Example 1) where the blocked isocyanate is used, the adhesive agent composition using the water soluble curing agent does not cause precipitation and is extremely stable.

As is clear from Table 2, as compared to a case (Comparative Example 1) where the blocked isocyanate is used, the adhesive agent composition using the water soluble curing agent is high in adhesive force and excellent in adhesive property.

## Claims

1. An adhesive agent composition for an organic fiber,
the adhesive agent composition comprising epoxy resin and a water soluble curing agent.

2. The adhesive agent composition according to claim 1, wherein the water soluble curing agent is an imidazole compound or a carboxylate compound.

3. The adhesive agent composition according to claim 1 or 2, wherein the organic fiber is a polyester fiber or an aramid fiber.

4. A method of treating an organic fiber,
the method comprising the steps of:
(i) treating the organic fiber with the adhesive agent composition according to claim 1 or 2 as a first treating agent; and
(ii) treating the organic fiber, having been treated with the first treating agent, with a second treating agent containing a resorcin-formalin-rubber latex (RFL).

5. The method according to claim 4, wherein the organic fiber is a polyester fiber or an aramid fiber.

6. An organic fiber treated by the method according to claim 4 or 5.

7. A tire, hose, or belt using the organic fiber according to claim 6.
